# EUROPEAN PATENT APPLICATION

(11) **EP 2 626 796 A1**
(43) Date of publication of application: **14.08.2013**
(21) Application number: 13152327.6
(22) Date of filing: 23.01.2013
(51) Int. Cl.: G06F 17/30

(54) **File list generation method, system, and program, and file list generation device**

(30) Priority: 07.02.2012 JP 2012024011
(71) Applicant: Hitachi Solutions, Ltd., Tokyo 140-0002 (JP)
(72) Inventor: Nishida, Shimpei, Shinagawa-ku, Tokyo 140-0002 (JP); Furuya, Saori, Shinagawa-ku, Tokyo 140-0002 (JP)
(74) Representative: Liesegang, Eva

(57) **Abstract**

The present invention aims to create, at high speed, a list including only the latest operations performed on a single file, or a difference list showing a list of the latest file data added, changed, or deleted in a file server, by analyzing an operation history list. A file list generation method of the present invention includes: a first step of acquiring, from a file server, an operation history list showing additions, changes, and deletions performed on file data in a search target file after the last search index creating operation, the file server managing the search target file; and a second step of, when more than one operation history about a single file is included in the acquired operation history list, obtaining only the latest operation histories and then consolidating the operation histories and operation histories of the other files, and outputting the consolidated list as a difference list showing the differences from the history list of operations performed on the search target file after the last search index creating operation.

## Description

### BACKGROUND OF THE INVENTION

### Field of the Invention

The present invention generally relates to a method, system, program, and device for generating a list of file data about which search indices are to be updated in a search system, and more particularly, to a method, system, program, and device for creating, at high speed, a list of files added, updated, or deleted in the data stored in a file server, based on operation histories acquired through an interface, in the case where the file server in which search indices are to be created has the interface for acquiring the histories of operations performed on the data in the file server.

### Background Art

As the speed of computer performance has become higher, and the capacities of HDDs have become larger in recent years, a huge number of unstructured documents are being created. Therefore, there is an increasing demand for search systems that are capable of accurately retrieving required documents from an enormous number of documents at high speed. To achieve an accurate search result, it is critical that adding, changing, and deleting operations performed, after the search index creation, on the file data in a file server storing unstructured documents to be searched be timely reflected by the search indices. In causing the search indices to reflect such operations, a long period of time is required if the search indices about unchanged file data are also updated. Therefore, only the search indices about the file data that have been added, changed, or deleted are normally updated. To do so, it is necessary to create a list of file data that have been added, changed, or deleted.

To satisfy the demand for such search systems, there is a type of system including an interface that stores the histories of operations performed on the file data in a file server, and provides the operation histories in response to a request from the outside.

One of such conventional arts is disclosed in JP Patent Publication (Kokai) No. 2006-268456 A.

To cause the search indices to timely reflect adding, changing, and deleting operations performed on file data, there is a suggested method for achieving high speed by using a large number of servers that perform, in a distributed manner, an operation to create new search indices about search target files in the file server, and an operation to update the search indices about the files that have been added, changed, or deleted.

In creating a list of file data for which indices are to be created and updating is to be performed, an interface that returns a list of files to be updated is used, if the file server provides such an interface. If the file server does not include such an interface, however, it is normally necessary to list the files to be processed, and determine whether to perform an updating operation, by scanning all the file data existing in the search index creation area in the file server.

Particularly, when the indices are updated, even if the amount of file data added, changed, or deleted is small, all the file data need to be scanned. As a result, the operation to create a list of added, changed, or deleted file data leads to prolongation of the index updating operation.

In the case where the file server includes an interface that returns a list of file operation histories, on the other hand, the operation history list is acquired through the interface, and additions, changes, and deletions can be reflected by the search indices in accordance with the operation history list. However, there are cases where more than one operation history about a single file is included in the operation history list. In such a case, the search indices cannot be correctly updated, unless the search indices are updated in the chronological order of the operation history list. Where such sequential processing is required, the operation history list is divided, and a large number of servers are used to perform distributed processing. Where the search indices are to be updated, the results of the distributed processing need to be arranged in the chronological order of the operation history list prior to the updating of the search indices. Even if the processing of the second half of the operation history list is completed at high speed, completion of the processing of the first half of the operation history list needs to be awaited. The existence of more than one operation history about a single file in the operation history list is the reason why sequential processing is necessary.

### SUMMARY OF THE INVENTION

An object of the present invention is to create a list including only the latest operations performed on a single file, or the latest list of file data that have been added, changed, or deleted in the file server (the list will be hereinafter referred to as the difference list), by analyzing an operation history list. Another object is to facilitate distributed execution of a new search index creating operation and an updating operation, and update the search indices at high speed, by using a distributed processing server cluster to perform the operation to convert the history list into the difference list in a distributed manner, and convert the long operation history list returned by a large-capacity storage into the difference list at higher speed.

To achieve the above object, a file list generation method according to the present invention includes: a first step of acquiring, from a file server, an operation history list showing additions, changes, and deletions performed on file data in a search target file after the last search index creating operation, the file server managing the search target file; and a second step of, when more than one operation history about a single file is included in the acquired operation history list, obtaining only the latest operation histories and then consolidating the operation histories and operation histories of the other files, and outputting the consolidated list as a difference list showing the differences from a history list of operations performed on the search target file after the last search index creating operation.

In the case where the number of the operation histories acquired in the first step is equal to or larger than a predetermined number, difference lists about respective file paths may be generated by more than one distributed processing server in a parallel manner, and the difference lists about the respective file paths may be consolidated and be output as a difference list in the second step.

Also, the period of time from the last search index creating operation until the present time may be divided into several periods, and operation history lists about the respective divisional periods may be acquired in the first step. In the case where processing of the acquired operation history lists is assigned to more than one distributed processing server, and more than one operation history about a single file is included in the operation history lists assigned to the respective distributed processing servers, only the latest operation histories are obtained, and the operation histories and operation histories processed by the other distributed processing servers in a distributed manner are consolidated and are output as a difference list showing the differences from a history list of operations performed on the search target file after the last search index creating operation in the second step.

A file list generation system according to the present invention includes: first means that acquires, from a file server, an operation history list showing additions, changes, and deletions performed on file data in a search target file after the last search index creating operation, the file server managing the search target file; and second means that, when more than one operation history about a single file is included in the acquired operation history list, obtains only the latest operation histories and then consolidates the operation histories and operation histories of the other files, and outputs the consolidated list as a difference list showing the differences from a history list of operations performed on the search target file after the last search index creating operation.

In the case where the number of the operation histories acquired by the first means is equal to or larger than a predetermined number, difference lists about respective file paths may be generated by more than one distributed processing server in a parallel manner, and the second means may consolidate the difference lists about the respective file paths to output a difference list.

The period of time from the last search index creating operation until the present time may be divided into several periods, and the first means may acquire operation history lists about the respective divisional periods. In the case where processing of the acquired operation history lists is assigned to more than one distributed processing server, and more than one operation history about a single file is included in the operation history lists assigned to the respective distributed processing servers, the second means may obtain only the latest operation histories, consolidate the operation histories and operation histories processed by the other distributed processing servers in a distributed manner, and output the consolidated list as a difference list showing the differences from a history list of operations performed on the search target file after the last search index creating operation.

A file list generation program according to the present invention is a program used in a file list creation server, and causes the file list creation server to execute a process including: a first step of acquiring, from a file server, an operation history list showing additions, changes, and deletions performed on file data in a search target file after the last search index creating operation, the file server managing the search target file; and a second step of, when more than one operation history about a single file is included in the acquired operation history list, obtaining only the latest operation histories and then consolidating the operation histories and operation histories of the other files, and outputting the consolidated list as a difference list showing the differences from a history list of operations performed on the search target file after the last search index creating operation.

In the case where the number of the operation histories acquired in the first step is equal to or larger than a predetermined number, difference lists about respective file paths may be generated by more than one distributed processing server in a parallel manner, and the difference lists about the respective file paths may be consolidated and be output as a difference list in the second step.

The period of time from the last search index creating operation until the present time may be divided into several periods, and operation history lists about the respective divisional periods may be acquired in the first step. In the case where processing of the acquired operation history lists is assigned to more than one distributed processing server, and more than one operation history about a single file is included in the operation history lists assigned to the respective distributed processing servers, only the latest operation histories are obtained, and the operation histories and operation histories processed by the other distributed processing servers in a distributed manner are consolidated and are output as a difference list showing the differences from a history list of operations performed on the search target file after the last search index creating operation in the second step.

According to the present invention, an operation history list showing additions, changes, and deletions performed on the file data in the search target file after the last search index creating operation is acquired from a file server that stores the histories of operations performed on the data in the file server and has an interface to return a history list in response to a request. In the case where more than one operation history about a single file is included in the acquired operation history list, only the latest operation histories are obtained, and the operation histories and operation histories of the other files are consolidated and are output as a difference list showing the differences from the history list of the operations performed on the search target file after the last search index creating operation. Accordingly, a list of files that have been added, changed, or deleted in the file server can be created at high speed.

Thus, creation of new search indices and distributed execution of the updating operation can be facilitated. As the new search index creating operation and the updating operation can be performed at high speed, the results of a search conducted by the search system can be made as accurate as possible.

### BRIEF DESCRIPTION OF THE DRAWINGS

FIG. 1 is a diagram showing a system configuration in a first embodiment according to the present invention.
FIG. 2 is a diagram showing the data structure of an index target file in the file server.
FIG. 3 is a diagram showing the data structure of a history list returned from the file server.
FIG. 4 is a flowchart of an operation to acquire history lists in a distributed manner by using the distributed processing server cluster, and obtain the latest history items in the respective files to convert into a difference list.

### DETAILED DESCRIPTION OF THE PREFERRED EMBODIMENTS

The following is a detailed description of a first embodiment for carrying out the present invention, with reference to the accompanying drawings.

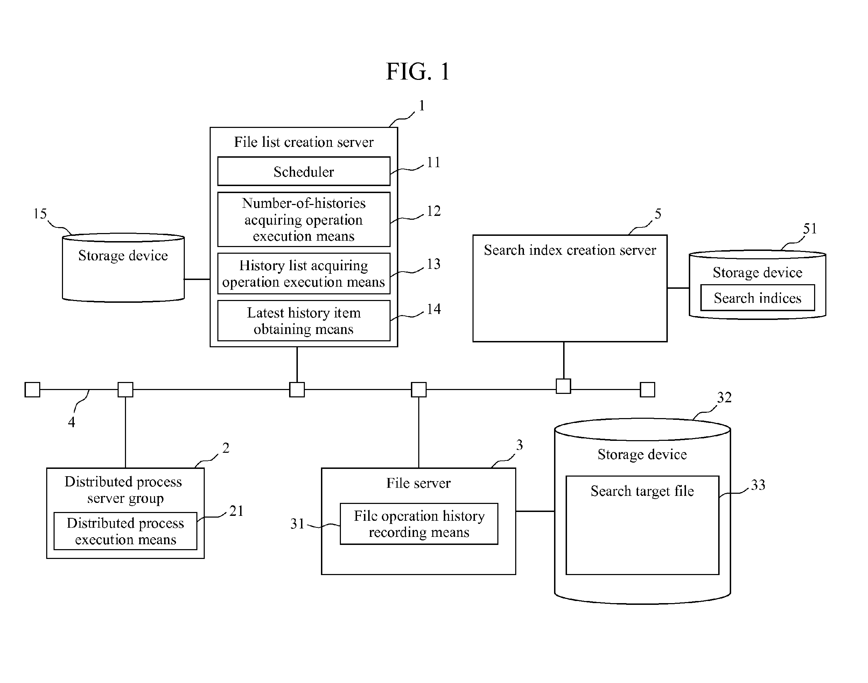

FIG. 1 is a diagram showing a system configuration in the first embodiment according to the present invention.

The file list generation system shown in FIG. 1 is a system in which a file list creation server 1, a distributed processing server cluster 2, and a file server 3 (hereinafter referred to as the "servers and the like") are connected in such a manner as to be able to communicate with one another by a wire or wireless communication line such as a LAN (Local Area Network) 4 or the like.

In FIG. 1, the servers and the like are connected so as to be able to communicate with one another by the LAN 4. However, the servers and the like are not necessarily connected by a LAN, but may be connected by a WAN (Wide Area Network) or the Internet, for example. Also, in FIG. 1, the servers and the like are connected in the same LAN segment. However, this configuration is merely an example, and the system may have any other configuration. Furthermore, in FIG. 1, the single file list creation server 1, the single distributed processing server cluster 2, and the single file server 3 are provided, but two or more file list creation servers 1, two or more distributed processing server clusters 2, and two or more file servers 3 may be provided. The file list creation server 1, the distributed processing server cluster 2, and the file server 3 are not necessarily different devices from one another, and the functions of the file list creation server 1, the distributed processing server cluster 2, and the file server 3 can be realized by a single device, for example.

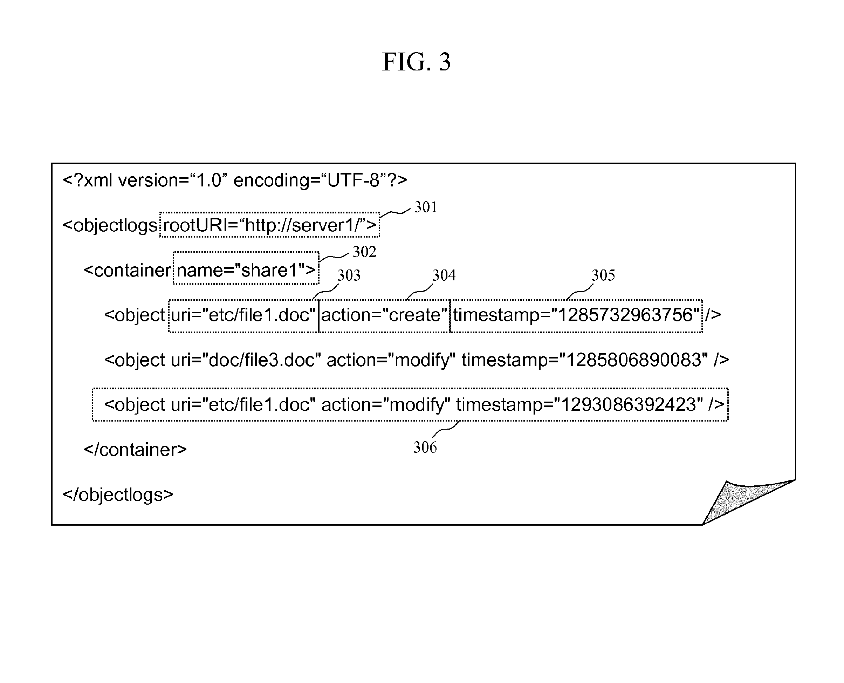

The file server 3 includes file operation history recording means 31, and is designed to record histories of operations such as additions, changes, and deletions that have been performed on a search target file 33 stored in a storage device 32 connected to the file server 3, and return a history list in response to a request from a client using HTTP (Hypertext Transfer Protocol) or the like. This history list will be described in detail, with reference to FIG. 3.

With the above described structure, the file list creation server 1 uses the distributed processing server cluster 2 to acquire the history list from the file server 3 and perform a convert operation to convert operation histories into a difference list between the acquired history list and the last updating of the indices.

The file list creation server 1 is a device such as a personal computer (PC), and is connected to a storage device 15 so as to be able to communicate with the storage device 15. The storage device 15 is a device such as a magnetic disk, and is installed in or externally connected to the file list creation server 1. The storage device 15 and the main storage device or the like of the file list creation server 1 function as the storage means of the file list creation server 1.

The file list creation server 1 includes a scheduler 11, number-of-histories acquiring operation execution means 12, history list acquiring operation execution means 13, and latest history item obtaining means 14. The file list creation server 1 includes a CPU, a main storage device, and the like. The CPU loads the programs of the number-of-histories acquiring operation execution means 12 and the like stored in the storage device 15 into the main storage device, and executes the instruction codes, to perform various kinds of operations.

Where a difference list is created on a regular basis and the search indices are updated, the scheduler 11 refers to a list creating operation execution interval stored in the storage device 15 and actuates the number-of-histories acquiring operation execution means 12. After that, the scheduler 11 actuates the history list acquiring operation execution means 13, to acquire a history list from the file server 3. The scheduler 11 then actuates the latest history item obtaining means 14, to obtain only the latest one of the operation histories about a single file included in the history list and convert into a difference list. This series of operations will be described later as an operation to convert a history list into a difference list (S401 and others).

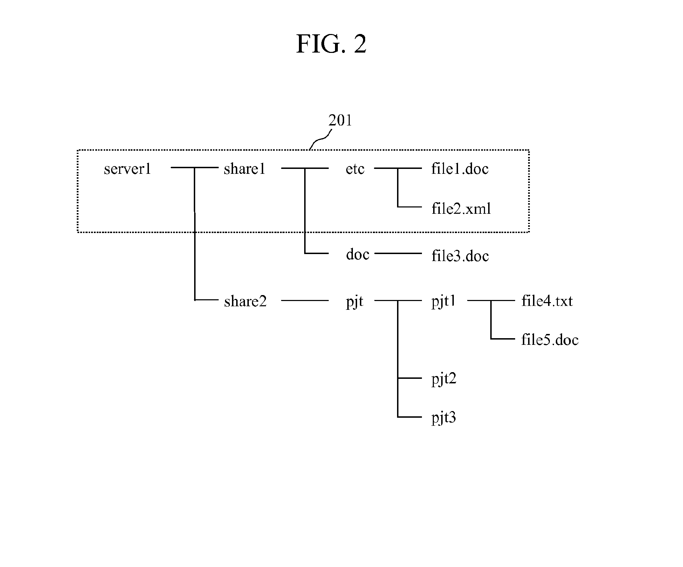

FIG. 2 is a conceptual diagram showing a specific example structure of the search target file 33 in the file server 3.

In the structure of the search target file 33 in the file server 3 shown in this conceptual diagram, the identifier of a file server 3 is "server1". The "server1" is shared by two directories that can be uniquely identified by shared identifiers "share1" and "share2", respectively. In "share1 and "share2" in "server1", there are the directories and files shown in the diagram. For example, two directories "etc" and "doc" exist in "share1" of "server1". Two files "file1.doc and "file2.xm1" exist in the directory "etc", and a file "file3.doc" exists in the directory "doc". Likewise, a directory "pjt" exists in "share2" of "server1", and three directories "pjt1", "pjt2", and "pjt3" exist in the directory "pjt". Two files "file4.txt" and "file5. doc" exist in the directory "ptj1".

FIG. 3 is a conceptual diagram specifically showing a history list to be returned by the file operation history recording means 31 of the file server 3, using the example shown in FIG. 2.

A history list 300 includes data 301 indicating which server the history list is about. In this example, data "http://server1/" is assigned to an element "objectlogs" in XML having an attribute "rootURI" attached thereto, to indicate "server1" shown in FIG. 2.

The history list 300 also includes data 302 indicating which shared directory the history list is related to. In this example, data "share1" is assigned to an element "container" in XML having an attribute "name" attached thereto, to indicate the shared folder named "share1" shown in FIG. 2.

Each operation history includes file identification data 303 for identifying which file the operation is intended for. In this example, data "etc/file1.doc" is assigned to an element "object" in XML having an attribute "uri" attached thereto, to indicate the file "file.doc" in the folder "etc" in the shared folder "share1" shown in FIG. 2.

At the same time, each operation history includes data 304 for indicating what kind of operation has been performed. In this example, an attribute "action" is attached, and data "create" is assigned, to indicate that a file has been created.

The value that may be included in the attribute "action" is "modify", which indicates that the contents of an existing file and directory or meta data have been changed, or "delete", which indicates that an existing file or directory has been deleted, other than "create", which indicates that a new file or directory has been added to the search target files.

Each operation history further includes data 305 indicating when the operation was performed. In this example, an attribute "timestamp" is attached, to indicate the date and time of the operation by the millisecond starting from 00:00, January 1, 1970.

In each operation history, operations performed on a single file are recorded in chronological order. Data 306 indicates that another operation was performed on the same file as the file indicated by the data 303 later than the time indicated by the data 305.

In this manner, the sequential order of adding, updating, and deleting operations performed on the files or directories in the shared folder 302 of a server 301 is indicated by the order of appearance of "object" elements in XML. In this manner, the XML shown in FIG. 3 forms a history list showing the history of operations performed on the shared folder 302 of a server 301.

Although the history list 300 in FIG. 3 is written in the XML (Extensible Markup Language) format, history lists are not necessarily written in the XML format, and may be written in some other format such as the JSON (Java Script Object Notation: Java being a registered trade name) or the CSV (Comma Separated Values) format.

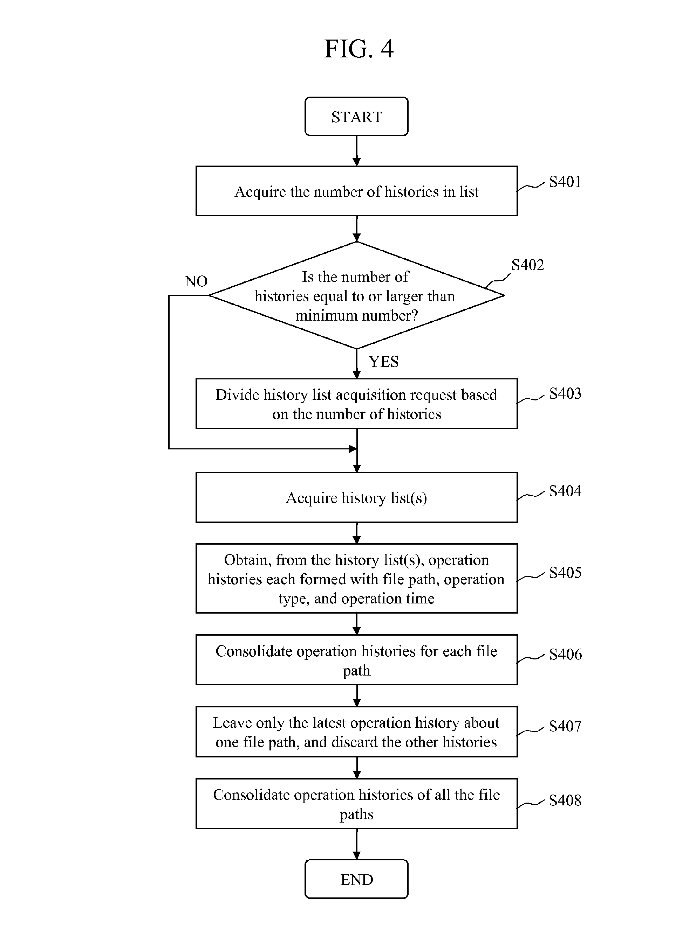

FIG. 4 is a flowchart of an operation to acquire the history list 300 in a distributed manner by using the distributed processing server cluster 2, obtain the latest history items in the respective files, and convert the latest items into a difference list.

The procedures up to S401 in FIG. 4 are as follows. Where the search indices are updated on a regular basis, the scheduler 11 refers to the list creating operation execution interval stored in the storage device 15 as described above, and starts the operation to create a difference list.

The search indices are created by a search index creation server 5, and are stored in the storage device 51. The search indices are updated in accordance with an instruction from the scheduler 11.

The number-of-histories acquiring operation execution means 12 of the file list creation server 1 inquires of the file server 3 about the number of histories included in the list of histories that have occurred from the time when the indices are last updated until the present time, by using communication means such as HTTP. In this manner, the number-of-histories acquiring operation execution means 12 acquires the number of histories (S401).

A check is then made to determine whether the acquired number of histories is equal to or larger than a minimum number (S402). In view of the fact that the present invention aims to achieve a higher speed by performing, in a parallel manner, operations to obtain the latest operation history items from the history of a single file included in the history list and converting the latest operation history items into a difference list, the above check is performed so as to prevent the overhead required for performing parallel operations from becoming larger than the benefit of high speed by performing parallel operations in the case where the number of histories in the list is very small. The minimum number of histories is a value stored in a setting file or the like in the file list creation server 1. This value may be "50,000", for example, and is preferably set by estimating the number of histories with which the single file list creation server 1 or one distributed processing server in the distributed processing server cluster 2 can complete the operation to obtain the latest operation history items from the histories about a single file included in the history list, and convert the latest operation history items into a difference list in several minutes at the longest.

In the case where it is determined in S402 that the number of acquired histories in the list is equal to or larger than the minimum number, a history list acquisition request is divided so that the distributed processing server cluster 2 can make requests in a parallel manner (S402).

In the case where the number of histories in the list is 1,000,000, for example, the first through 50,000th histories are assigned to the first server, and the 50,001st through 100,000th histories are assigned to the second server, so that the number of histories in the list assigned to each one server becomes equal to the minimum number. In this embodiment, the history list acquisition request is divided based on the number of histories by using the number-of-histories acquiring operation execution means 12. However, the dividing may be performed based on periods, instead of the number of histories. Specifically, in the case where the last index updating was performed three weeks ago, for example, the first server requests the history list equivalent to the week from three weeks ago until two weeks ago, the second server requests the history list equivalent to the week from two weeks ago until a week ago, and the third server requests the history list equivalent to the week from a week ago until the present time. According to the present invention, the period from the last index creation date until the present time can be divided into several periods, and the operation history lists about the respective periods are acquired. The operation history lists about the respective periods are assigned to distributed processing servers, and the latest operation history lists extracted by the respective distributed processing servers can be consolidated and output.

A history list request is then sent to the file server 3 by using communication means such as HTTP, and a history list is acquired (S404). In the case where it is determined in S402 that the number of histories in the list is equal to or larger than the minimum number, the distributed processing server cluster 2 issue requests in a parallel manner in accordance with the dividing process of S403.

In the case where it is determined in S402 that the number of histories in the list is smaller than the minimum number, a single server requests a history list, and acquires the history list.

Operation histories formed with file paths, operation types, and operation times are obtained from the acquired history list (S405). Each file path can be created by connecting the data 301 indicating the server, the data 302 indicating the shared folder, and the data 303 indicating the file as shown in FIG. 3.

The operation histories about a single path are then consolidated (S406).

In the respective file paths, only the operation histories closest to the present time are left, and the other histories are discarded, based on the operation times (S407).

The processes of S405, S406, and S407 are performed by the distributed processing server cluster 2 in a parallel manner, regardless of the determination result of S402.

The operation histories of all the file paths are then consolidated (S408). The list formed with the consolidated operation histories is a difference list formed by obtaining the latest operation history items from the histories of a single file by the distributed processing server cluster 2 in parallel operations, and at this point, the operation to convert the history list into the difference list is completed.

In the case where an operation history overlaps between divisional lists or divisional periods, the files cannot be properly consolidated, and there might be a file overlap. However, such a problem can be solved in the following manner. In the case where the number of operation histories is equal to or larger than a predetermined number, a difference list about each file path is generated by distributed processing servers in a parallel manner based on the number of operation histories. However, the operation histories about a single file path are certainly processed by a single server to generate a difference list.

This can be performed by first sorting the acquired histories in alphabetical order of the file path, and the sorted histories are exchanged among the distributed processing servers. The sorted histories are assigned to the distributed processing servers in such a manner that the histories about a single file path are assigned to one distributed processing server.

In the case where the period is divided, the histories can be assigned in the same manner as above. Accordingly, even in the case where an operation history overlaps between divisional values of the periods, a difference list including only the latest histories can be generated, without any overlap left.

In addition, the program can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g. magneto-optical disks), CD-ROM (read only memory), CD-R, CD-R/W, and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

### DESCRIPTION OF SYMBOLS

- 1: File list creation server
- 2: Distributed processing server cluster
- 3: File server
- 4: Network
- 11: Scheduler
- 12: Number-o f-histories acquiring operation execution means
- 13: History list acquiring operation execution means
- 14: Latest history item obtaining means
- 15: Storage device connected to file list creation server 1
- 21: Distributed process execution means
- 31: File operation history recording means
- 32: Storage device connected to file server 3
- 33: Search target file
- 201: Specific example of search target file
- 300: Operation history list
- 301: Data indicating server in operation history list
- 302: Data indicating shared folder in operation history list
- 303: Data indicating file in operation history list
- 304: Data indicating operation type in operation history list
- 305: Data indicating operation time in operation history list

## Claims

1. A file list generation method comprising:
a first step of acquiring, from a file server, an operation history list showing an addition,
a change, and a deletion performed on file data in a search target file after the last search index creating operation, the file server managing the search target file; and
a second step of, when a plurality of operation histories about a single file are included in the acquired operation history list, obtaining only the latest operation histories and
then consolidating the operation histories and operation histories of another file, and
outputting the consolidated list as a difference list showing a difference from a history list of operations performed on the search target file after the last search index creating operation.

2. The file list generation method according to claim 1, wherein, when the number of the operation histories acquired in the first step is equal to or larger than a predetermined number, difference lists about respective file paths are generated by a plurality of distributed processing servers in a parallel manner, and the difference lists about the respective file paths are consolidated and are output as a difference list in the second step.

3. The file list generation method according to claim 1 or 2, wherein
a period of time from the last search index creating operation until the present time is divided into a plurality of periods, and operation history lists about the respective divisional periods are acquired in the first step, and,
in the second step, when processing of the acquired operation history lists is assigned to a plurality of distributed processing servers, and a plurality of operation histories about a single file are included in the operation history lists assigned to the respective distributed processing servers, only the latest operation histories are obtained, the operation histories and operation histories processed by another distributed processing server in a distributed manner are consolidated and are output as a difference list showing a difference from a history list of operations performed on the search target file after the last search index creating operation.

4. A file list generation system comprising:
first means that acquires, from a file server, an operation history list showing an addition, a change, and a deletion performed on file data in a search target file after the last search index creating operation, the file server managing the search target file; and
second means that, when a plurality of operation histories about a single file are included in the acquired operation history list, obtains only the latest operation histories and then consolidates the operation histories and operation histories of another file, and
outputs the consolidated list as a difference list showing a difference from a history list of operations performed on the search target file after the last search index creating operation.

5. The file list generation system according to claim 4, wherein, when the number of the operation histories acquired by the first means is equal to or larger than a predetermined number, difference lists about respective file paths are generated by a plurality of distributed processing servers in a parallel manner, and the second means consolidates the difference lists about the respective file paths to output a difference list.

6. The file list generation system according to claim 4 or 5, wherein
a period of time from the last search index creating operation until the present time is divided into a plurality of periods, and the first means acquires operation history lists about the respective divisional periods, and,
when processing of the acquired operation history lists is assigned to a plurality of distributed processing servers, and a plurality of operation histories about a single file are included in the operation history lists assigned to the respective distributed processing servers, the second means obtains only the latest operation histories, consolidates the operation histories and operation histories processed by another distributed processing server in a distributed manner, and outputs the consolidated list as a difference list showing a difference from a history list of operations performed on the search target file after the last search index creating operation.

7. A file list generation program used in a file list creation server, the program causing the file list creation server to execute the method of one of claims 1 to 3.
